# EUROPEAN PATENT APPLICATION

(11) **EP 2 242 220 A1**
(43) Date of publication of application: **20.10.2010**
(21) Application number: 08703070.6
(22) Date of filing: 10.01.2008
(51) Int. Cl.: H04L 12/56

(54) **NETWORK CARD AND INFORMATION PROCESSOR**

(71) Applicant: Sumitomo Electric Networks, Inc., Tokyo 141-0022 (JP)
(72) Inventor: NAGAI, Masamoto, Tokyo 141-0022 (JP); NISHIMOTO, Hiroaki, Tokyo 141-0022 (JP)
(74) Representative: Cross, Rupert Edward Blount
(86) International application number: PCT/JP2008/050206
(87) International publication number: WO 2009/087774

(57) **Abstract**

A network card, having a host connector and a network connector, comprises receiving means for receiving data transmitted through the network connector by block data of a second size larger than a first size as a unit through the host connector, a buffer memory for temporarily storing the received block data, and transmitting means for generating a data frame of not more than the first size and transmitting the data frame over a network connected to the network connector.

## Description

### Technical Field

The present invention relates to a data transmitting technique and, in particular, to a technique for efficiently transmitting broadband streaming data.

### Background Art

Streaming services such as video on demand (VOD) have recently become a reality. As access networks have recently been broadening their bandwidths, the bandwidth per item of video streaming data transmitted from a delivery server has also been increasing. From now on, the delivery of so-called HD (high-definition) images and the like are expected to further broaden the bandwidth. As the data transmission rate from a delivery server increases, the utilization ratio of buses (e.g., PCI) within the delivery server also tends to become higher.

For each network interface, the maximum transferable data length (MTU) is defined according to its standard in general. It is about 1.5 KB at the maximum for Ethernet (registered trademark) also known as IEEE802.3-series standard, for example. Therefore, even when an internal bus can transmit a sufficiently large data length therethrough, a device driver divides the data to be transmitted over a network into smaller data pieces having a size not exceeding the above-mentioned MTU and transfers them to an interface board through the internal bus in general. This division is referred to as fragment processing. Thereafter, the data pieces are processed by MAC/PHY on the board and then transmitted to the network.

In streaming services, on the other hand, the amount of data is so large that packet discards on the network and the like may occur. In order to keep retransmission requests from being sent from the reception side in this case, forward error correction (FEC) encoding is utilized in the delivery server. For example, the encoding disclosed in Patent Document 1 has been utilized.
Patent Document 1: International Publication WO2005/11225

### Disclosure of the Invention

### Problems to be solved by the Invention

In general, an internal bus can transfer a sufficiently large data unit (data length) in conformity to the transmission unit of streaming data. As a result of the restriction by MTU, however, the data length flowing through the internal bus becomes smaller as mentioned above. Hence, there is a problem in the transmission of streaming data that bus congestion is likely to occur, while a CPU power is required for the fragment processing.

A further CPU power is required for executing the encoding such as the one disclosed in Patent Document 1 for a large amount of data.

In view of the problems mentioned above, it is an object of the present invention to solve at least one of the problems.

### Means for Solving the Problems

For solving at least one of the above-mentioned problems, the network card of the present invention comprises the following structure.

That is, a network card, having a host connector to be connected to a bus connector provided in a host device and a network connector to be connected a network, comprises: receiving means, letting a first size be the maximum size of a data frame transmittable through the network connector, for receiving data to be transmitted through the network connector by block data of a second size larger than the first size as a unit through the host connector; a buffer memory for temporarily storing the block data received in the receiving means; and transmitting means for reading data to be included in a data frame to be transmitted from the buffer memory, generating a data frame of the first size or smaller, and transmitting the data frame to the network connected to the network connector.

For solving at least one of the above-mentioned problems, the information processor of the present invention comprises the following structure.

That is, in an information processor having a host processing section and a network processing section which are connected to each other through a bus and transmitting streaming data to a network, the host processing section comprises: data input means for inputting stream data; and bus transfer means, letting a first size be the maximum size of a data frame transmittable in the network, for transferring at least the stream data to the network processing section through the bus by block data of a second size greater than the first size as a unit, and the network processing section comprises: receiving means for receiving the block data transmitted from the bus transfer means through the bus; storage means for temporarily storing the block data received in the receiving means; and transmitting means for reading data to be included in a data frame to be transmitted from the storage means, generating a data frame of the first size or smaller, and transmitting the data frame to the network connected to the network connector.

### Effects of the Invention

The present invention can provide a technique for efficiently transmitting streaming data.

### Brief Description of the Drawings

Fig. 1 is a diagram illustrating an overall structure of a streaming delivery system by way of example;
Fig. 2 is a diagram illustrating the inner structure of a delivery server according to a first embodiment;
Fig. 3 is a diagram illustrating the inner structure of a network board within the delivery server according to the first embodiment;
Fig. 4 is a diagram illustrating a functional structure relating to a data transmission of the delivery server according to the first embodiment;
Fig. 5 is a data processing flowchart in the delivery server according to the first embodiment;
Fig. 6 is a diagram illustrating the inner structure of the network board within the delivery server according to a second embodiment; and
Fig. 7 is a diagram illustrating a functional structure relating to a data transmission of the delivery server according to the second embodiment.

### Description of Reference Numerals

100...delivery server; 110a, 110b...receiving terminal; 301...packet handler (transmitting means); 302...memory (buffer memory or storage means); 303...memory controller; 310...bus I/F (receiving means); 401...input section (input means); 402...bus transfer section (bus transfer means); 403...fragment processing section (transmitting means); and 404... smoothing processing section (transmission interval control means).

### Best Modes for Carrying Out the Invention

In the following, preferred embodiments of the present invention will be explained in detail with reference to the drawings. These embodiments are just exemplary and do not intend to limit the scope of the present invention only thereto.

### First Embodiment

As the first embodiment of the data transmission device according to the present invention, a streaming delivery device constituted by a universal PC and a network board will be explained in the following by way of example.

### Summary

In the streaming delivery device according to the first embodiment, fragment processing which has conventionally been carried out by a CPU of the PC body executing a device driver program is performed by hardware on the network board. As a result, the load on the CPU of the PC body is reduced, while data can be transferred through a bus to the network board by a greater data length, whereby the bus utilization efficiency can be improved.

### System structure and device structure

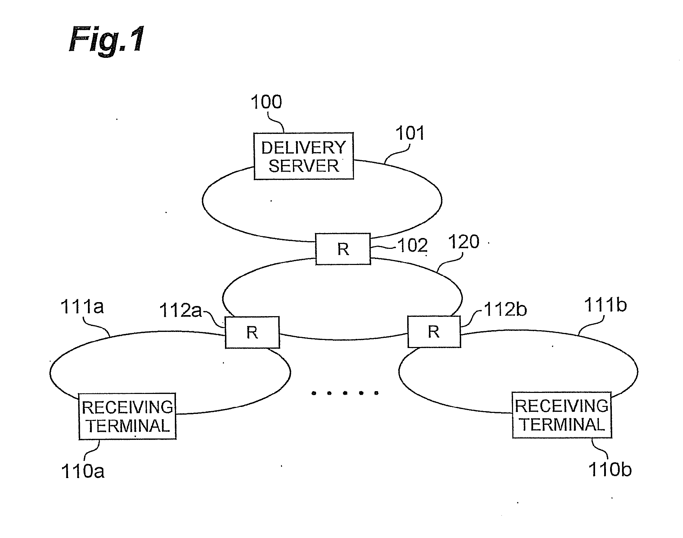

Fig. 1 illustrates a conceptual diagram of the overall structure of the streaming delivery system.

A delivery server 100 is a streaming delivery server, while 110a and 110b are streaming receivers. 101, 111a, and 111b are respective network segments to which the delivery server 100 and receivers 110a, 110b belong. The network segments 101, 111a, 111b are connected to each other through routers 102, 112a, 112b and a core network 120. The following explanation will assume that the Internet Protocol (IP) is used for transferring data between the network segments.

The delivery server 100 packetizes stream data into the form of RTP/UDP/IP and transmits the resulting packets to the receiving terminals 110a, 110b. Here, RTP and UDP refer to the real-time transport protocol and user datagram protocol, respectively. The delivery server 100 may deliver streaming data either by unicasting to each receiving terminal or by multicasting. The delivery may start according to a delivery request from each receiving terminal as in so-called video on demand (VOD) services.

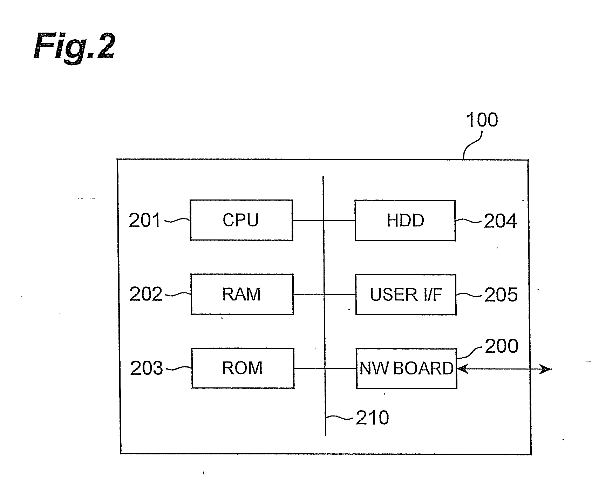

Fig. 2 is a diagram illustrating the inner structure of the delivery server according to the first embodiment. As depicted, the delivery server 100 is constituted by a CPU 201, a RAM 202, a ROM 203, an HDD 204, a user I/F 205, and a network (NW) board 200, which are connected to each other through an internal system bus 210.

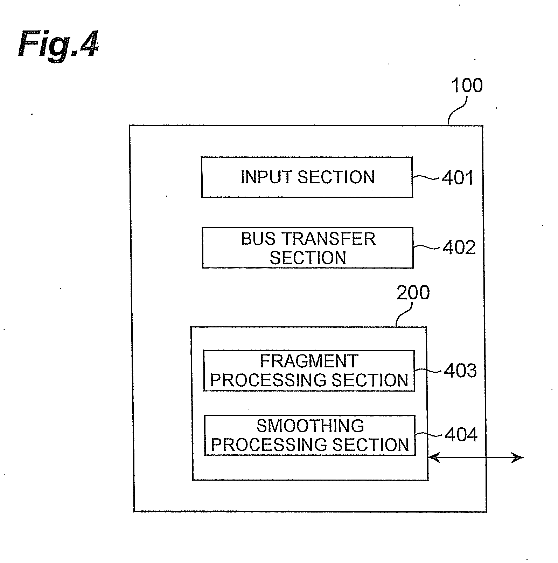

The CPU 201 executes various programs stored in the ROM 203 and HDD 204, so as to control each part or achieve each functional section which will later be explained with reference to Fig. 4. The ROM 203 stores programs to be executed at the time of booting the delivery server 100 and the like. The RAM 202 temporarily stores various programs executed by the CPU 201 and various kinds of data. The HDD 204, which is a large-capacity storage device, stores various programs and various data files. The programs include operating system (OS) programs and streaming delivery programs. The user I/F 205 includes user input devices such as a keyboard and a mouse which are not depicted and display output devices such as a display which is not shown.

The internal system bus 210 is assumed to be a universal bus such as a typical PCI bus, but may be a proprietary bus as a matter of course. However, the transfer speed and transferable data length must be higher and longer in the bus 210 than in the network 101, respectively.

For simplifying the explanation, the network (NW) board and the other part in the delivery server 100 may hereinafter be referred to as "NW board side" and "server body side", respectively.

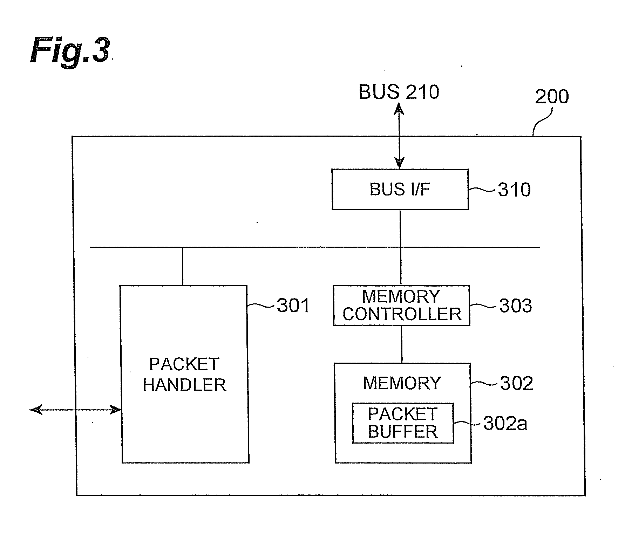

Fig. 3 is a diagram illustrating the inner structure of the network board within the delivery server according to the first embodiment. As depicted, the network board 200 is constituted by a packet handler 301, a memory 302, a memory controller 303, and a bus I/F 310.

The memory 302 is a part which temporarily stores data received from the server body side through the bus 210 and bus I/F 310 and has a packet buffer 302a therewithin. The packet buffer 302a secures respective areas for streams as will be explained later in detail.

The packet handler 301 is a circuit section which transmits the data temporarily stored in the memory 302 in a data format suitable for the network 110. Specifically, it subjects the data temporarily stored in the memory 302 to fragment processing and smoothing processing which will be explained later and then outputs the processed data to the network 110.

### Functional structure and operations

Fig. 4 is a diagram illustrating a functional structure of the delivery server according to the first embodiment.

The delivery server 100 comprises an input section 401, a bus transfer section 402, a fragment processing section 403, and a smoothing processing section 404 as functional sections relating to the data transmission. The functional sections of the input section 401 and bus transfer section 402 are achieved when the CPU 201 on the server body side executes various programs. On the other hand, the functional sections of the fragment processing section 403 and smoothing processing section 404 are embodied by hardware on the NW board side. The functional sections will now be explained.

For simplification, only the processing for the streaming data in the form of RTP/UDP/IP in each processing section will be explained hereinafter. The other kinds of data are processed as conventionally done. Packets may be distinguished from each other according to their port numbers described in IP headers or simply based on their packet lengths.

The input section 401 is a functional section for inputting streaming files to be transmitted through the network board 200. Specifically, it is embodied when the CPU 201 executes streaming delivery software, so that streaming data stored in the HDD 204 or the like is read into the RAM 202. The input section 401 functions as input means.

The bus transfer section 402 divides the streaming data fed onto the RAM 202 by the input section 401 into predetermined fixed-length data pieces, stores them in the form of RTP/UDP/IP, and transfers them to the NW board side through the bus 210. Specifically, it is embodied when the CPU 201 executes an IP stack program and a device driver program for the NW board 200. The bus transfer section 402 functions as bus transfer means.

Unlike the case explained in the background art, the streaming data packet to be transferred is greater than the data length transmittable to the network 101. Even when the network 101 is Ethernet (registered trademark), i.e., when the maximum data length (MTU) (first size) is about 1.5 KB, for example, the data packet is transferred as a large data block (second size) of 32 KB, for example.

In general, specifications are fixed for data formats between each application and the IP stack program and between the IP stack program and each device driver, so that a large design change will be needed for altering them. However, it should be noted that the data format between the device driver and hardware such as those mentioned above can be designed relatively freely.

As will later be explained in detail, it will be preferred if the payload section excluding the respective headers of IP, UDP, and RTP in the data (data block) has a data length corresponding to an integral multiple (or a multiple of a power of 2) of the minimum processing unit of stream data.

The fragment processing section 403 is a functional section for dividing the data (data block) transferred from the bus transfer section 402 through the bus 210 (bus connector) into data lengths transmittable to the network 101. Specifically, it divides the data block stored in the memory 302 through an undepicted host connector into data lengths each of which is shorter than the MTU of the network 101 and regenerates the IP, UDP, and RTP headers corresponding to thus divided data pieces. Then, it stores the IP packets having a data length directly transmittable to the network 101 into the packet buffer 302a. The bus I/F 310 functions as receiving means, while the memory 302 functions as a buffer memory or storage means. The fragment processing section 403 constitutes a part of transmitting means, while the packet handler 301 functions as the transmitting means.

The regeneration of the IP, UDP, and RTP headers specifically refers to the following processing. The IP header describes the data length (payload length) of the data contained in its IP packet. The UDP header describes the data length of the data contained in its UDP packet and the checksum of the data. The RTP header describes the sequence number and time stamp of the data contained in the RTP packet. Therefore, as a result of the fragment processing by the fragment processing section 403, the RTP packet is divided, so that the information described within each header is computed in conformity to the divided packet, whereby the header information is updated. Equally dividing the payload section excluding the IP, UDP, and RTP headers in the data (data block) transferred from the bus transfer section 402 makes it easier to compute the header information. Therefore, it is desirable for the payload section of the data block to have a data length corresponding to an integral multiple (or a multiple of a power of 2) of the minimum processing unit of stream data as mentioned above.

The smoothing processing section 404 is a functional section which transmits the fixed-length IP packets stored in the packet buffer 302a by the fragment processing section 403 to the network 101 at regular intervals. Specifically, it computes a transmission interval according to the header information within the fixed-length IP packets stored in the packet buffer 302a and transmits the IP packets in their order of storage. The transmission interval can be computed by information of the data length in the IP header or UDP header and information of the time stamp in the RTP header, for example. The IP data may be transmitted in order such as to have preset transmission intervals which are expected to yield no bursty traffic characteristic. The smoothing processing section 404 functions as a transmission interval control means.

In the above explanation, the transmission control is carried out such that the IP (RTP) packets after the fragmentation have regular intervals in the time direction. In general, however, the NW board 200 may transmit not only the RTP packets, but also RTCP packets utilized for controlling the RTP packet stream, or other packets. Therefore, it will also be preferred if a time slot usable except for the RTP packets is secured beforehand and the transmission control is carried out such as to yield regular intervals in the period excluding the time slot.

### Operation flow

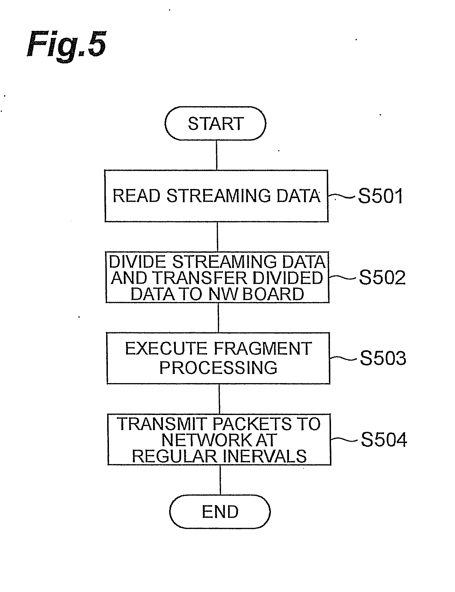

Fig. 5 is a data processing flowchart in the delivery server according to the first embodiment. The following steps start upon receiving a transmission request for stream data from the receiver 110a (or 110b), for example. Here, the minimum processing unit of the stream data is assumed to be 64 bytes.

At step S501, the input section 401 reads the streaming data requested by the receiver 110a from the HDD 204 or the like and stores it into the RAM 202.

At step S502, the bus transfer section 402 divides the data stored in the RAM 202 at step 5501 into data blocks each having a data length of 16 KB (= 64 bytes × 2⁸), for example. Then, the IP, UDP, and RTP headers for the data blocks are generated, stored in the form of RTP/UDP/IP, and transferred to the NW board side through the bus 210.

At step S503, the fragment processing section 403 divides the payload data within the data block transferred from the bus transfer section 402 through the bus 210 at step S502 into data having a data length of 512 bytes (= 64 bytes × 2³). That is, the data block is divided into data lengths each of which does not exceed the MTU in the network 101. For each of thus divided and generated data pieces having a length of 512 bytes, the IP, UDP, and RTP headers are regenerated and stored in the form of RTP/UTP/IP. Thus regenerated IP packets are stored in the packet buffer 302a.

At step S504, the smoothing processing section 404 transmits the IP packets stored in the packet buffer 302a at step S503 to the network 101 at regular intervals.

For simplification, the above-mentioned flowchart is explained such that the delivery server 100 transmits a single streaming data item. However, the above-mentioned processing can be executed for each of streaming data items. In particular, when the above-mentioned processing of the smoothing processing section 404 is executed for each streaming data item, the respective streaming data items reaching the network segments 111a, 111b to which the receivers 110a, 110b belong yield respective traffics with low burstiness, which is advantageous in that data losses are less likely to occur.

As explained in the foregoing, the delivery server of the first embodiment can greatly reduce the load (congestion) on the bus 210 caused by the fragment processing and the load on the CPU 201 caused by executing the fragment processing. Therefore, the bottleneck resulting from the transfer capability of the bus 210 or the processing capability of the CPU 201 can greatly be relaxed. As a result, the streaming data can be transmitted more efficiently.

### Second Embodiment

### Summary

In addition to the structure of the first embodiment, an encoder for forward error correction codes (FEC) is placed on the NW board in the second embodiment. The forward error correction codes herein include loss compensation codes. Such a structure can greatly reduce the CPU power consumed for FEC encoding processing. It can also reduce the bus utilization ratio (traffic).

The overall structure of the streaming delivery system (Fig. 1) and the inner structure of the delivery server (Fig. 2) are the same as those in the first embodiment and thus will not be explained.

### FEC code

Using a loss compensation code as an FEC code is effective in particular in the present invention. Therefore, Raptor codes which are FEC codes developed by Digital Fountain, Inc. of the USA are assumed to be used as FEC codes in the second embodiment. However, typical Reed-Solomon (RS) based codes can also be used as a matter of course. The Raptor codes will now be explained in brief; for details, refer to Patent Document 1 mentioned in the background art.

In the Raptor codes, a stream file is split into segments each having a specific data length (s x k bytes), and the data in each segment is divided into k pieces of data each having the same data length (s bytes) called "input symbol". Then, according to an index value called key, at least one input symbol is selected from the divided k input symbols, and XOR operations between the selected input symbols are performed bitwise, so as to produce data having a data length of s bytes called "output symbol". Such output symbols are continuously produced for different keys.

On the other hand, the receiving side receives k+α output symbols (where α is smaller than k) stochastically and performs XOR operations between the output symbols, thereby restoring the input symbols. This has an excellent characteristic in that the k+α output symbols are arbitrarily selectable, so that any packets lost during the transfer can be restored.

### Device structure

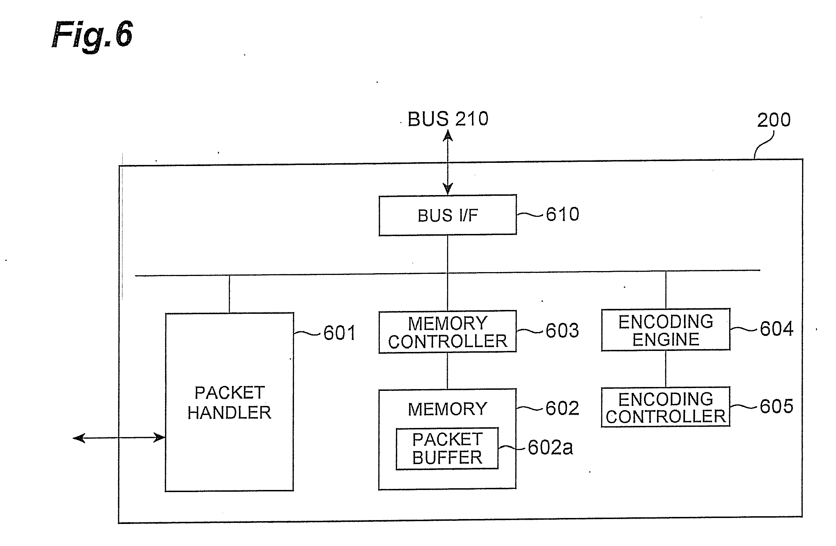

Fig. 6 is a diagram illustrating the inner structure of the network board within the delivery server according to the second embodiment. As depicted, the network board 600 comprises not only a packet handler 601, a memory 602, a memory controller 603, and a bus I/F 610, but also an encoding engine 604 and an encoding controller 605. In the following, the FEC encoding engine 604 and encoding controller 605, which are parts different from the first embodiment, will be explained.

The FEC encoding engine 604 is a circuit which executes the XOR operations by hardware. It has been well known for those skilled in art that arithmetic operations including the XOR operations can easily be constructed by hardware.

The encoding controller 605 is a functional section which achieves an encoding operation of the above-mentioned Raptor codes by controlling the FEC encoding engine 604. Constructing the encoding controller 605 by an undepicted CPU and a flash memory storing a control program is favorable in that it can easily be switched to other FEC encoding algorithms. The encoding controller 605 and FEC encoding engine 604 correspond to encoding means in the present embodiment.

Specifically, the encoding controller 605 selects at least one input symbol from the data (input symbols) temporarily stored in the memory 602 and inputs it into the FEC encoding engine 604, thereby producing output symbols in sequence. Thus produced output symbols are then temporarily stored in the memory 602.

It should be noted, however, that the number of output symbols is greater than that of input symbols by at least α as explained in connection with the above-mentioned Raptor codes, though they have the same data length.

The packet handler 601 is a circuit section which transmits the data constructed by the output symbols temporarily stored in the memory 602 in a data format suitable for the network 110. Specifically, it subjects the data temporarily stored in the memory 602 to the fragment processing and smoothing processing and then outputs the processed data to the network 110.

### Functional structure and operations

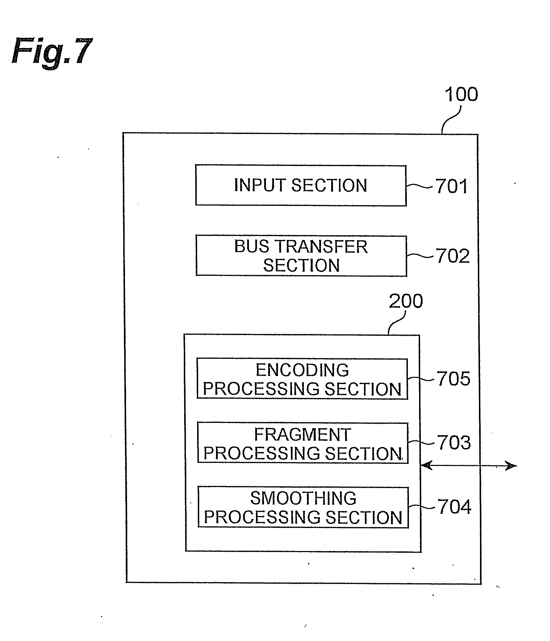

Fig. 7 is a diagram illustrating a functional structure of the delivery server according to the second embodiment.

As a functional part relating to the data transmission, the delivery server 100 comprises not only an input section 701, a bus transfer section 702, a fragment processing section 703, and a smoothing processing section 704, but also an encoding processing section 705. In the following, a part relating to the encoding processing section 705 which is a part different from the first embodiment will be explained.

The encoding processing section 705 is a functional section which executes the FEC encoding processing for the data transferred from the bus transfer section 702 through the bus 210. Specifically, it is embodied by the encoding engine 604 and encoding controller 605 and produces output symbols while regarding the data block stored in the memory 302 as the above-mentioned input symbols.

The fragment processing section 703 is a functional section which divides the output symbol (data block) encoded by the encoding controller 705 into data lengths transmittable to the network 101. Specifically, it divides the data block stored in the memory 602 into data lengths each of which is not longer than the MTU of the network 101 and regenerates the IP, UDP, and RTP headers corresponding to the divided data pieces. Then, it stores the IP packets having a data length directly transmittable to the network 101 into the packet buffer 602a.

As mentioned above, however, redundant data is added in the encoding processing by the encoding processing section 705, whereby the output rate of the encoding processing section 705 is higher than the input rate thereof. Specifically, when producing k+α output symbols from k input symbols, the output rate is (k+α)/k times the input rate, since the input and output symbols have the same data length. Here, the encoding ratio is expressed by k/(k+α), whereby the time stamp of the RTP header, for example, is set again according to the encoding ratio. That is, the time interval is set shorter than that at the time of no encoding by about k/(k+α) times. Here, the data amount of one of the input and output symbols corresponds to the first data amount in the present embodiment. The data amount corresponding to k input symbols is equivalent to the second data amount in the present embodiment.

The smoothing processing section 704 is a functional section which transmits the fixed-length IP packets stored in the packet buffer 602a by the fragment processing section 703 to the network 101 at regular intervals. Specifically, it computes a transmission interval according to the header information within the fixed-length IP packets and transmits the IP packets in their order of storage. Since the time stamp of the RTP header is set shorter as mentioned above, the transmission interval is also set shorter by about k/(k+α) times as a consequence.

As explained in the foregoing, the delivery server of the second embodiment can greatly reduce the load on the CPU 201 by executing the FEC encoding processing on the NW board 600 in addition to the fragment processing explained in the first embodiment. Since no redundant data caused by the FEC encoding flows through the bus 210, the bus utilization ratio (traffic) can be reduced. As a result, streaming data can be transmitted more efficiently.

### Modified Example

A fixed-length packet (512 bytes) smaller than the maximum transfer size (about 1.5 KB) of a network (Ethernet (registered trademark) here) to which the network board is directly connected is set as a transfer size in the foregoing explanation. However, it may be set substantially equal to the MTU as a matter of course. In general, a plurality of different networks may coexist between a delivery server and a receiving terminal and have MTUs different from each other. Therefore, path MTU discovery and the like may be used so as to detect a path MTU beforehand, and a packet size may be dynamically set such as to attain a path MTU corresponding to each terminal or lower when starting to deliver a stream.

## Claims

1. A network card comprising a host connector to be connected to a bus connector provided in a host device and a network connector to be connected to a network, comprising:
receiving means, letting a first size be the maximum size of a data frame transmittable through the network connector, for receiving data to be transmitted through the network connector by block data of a second size larger than the first size as a unit through the host connector;
a buffer memory for temporarily storing the block data received in the receiving means; and
transmitting means for reading data to be included in a data frame to be transmitted from the buffer memory, generating a data frame of the first size or smaller, and transmitting the data frame to the network connected to the network connector.

2. A network card according to claim 1, wherein the transmitting means further comprises transmission interval control means for transmitting at least one data frame to the network at substantially regular intervals in a time axis direction.

3. A network card according to claim 2, further comprising encoding means for carrying out forward error correction code (FEC) encoding processing for data included in the block data.

4. A network card according to claim 3, wherein the transmitting means generates a data frame of the second size or smaller according to the data encoded by the encoding means; and
wherein the transmission interval control means determines the interval for transmitting the data frame according to an encoding ratio used by the encoding means.

5. A network card according to claim 4, wherein the encoding means carries out the encoding processing by repeatedly executing an arithmetic operation employing a predetermined first data amount as a unit; and
wherein the transmitting means causes the data frame to include therein data having a size of an integral multiple of the first data amount.

6. A network card according to claim 4 or 5, wherein the encoding means carries out the encoding processing by using a predetermined second data amount as a unit, while the receiving means receives the block data set to a size of an integral multiple of the second data amount.

7. An information processor comprising a host processing section and a network processing section which are connected to each other through a bus and transmitting streaming data to a network;
wherein the host processing section comprises:
data input means for inputting stream data; and
bus transfer means, letting a first size be the maximum size of a data frame transmittable in the network, for transferring at least the stream data to the network processing section through the bus by block data of a second size greater than a first size as a unit; and
wherein the network processing section comprises:
receiving means for receiving the block data transmitted from the bus transfer means through the bus;
storage means for temporarily storing the block data received in the receiving means; and
transmitting means for reading data to be included in a data frame to be transmitted from the storage means, generating a data frame of the first size or smaller, and transmitting the data frame to the network connected to the network connector.

8. An information processor comprising a host processing section and a network processing section which are connected to each other through a bus and transmitting streaming data to a network;
wherein the host processing section comprises:
a data input section for inputting stream data; and
a bus transfer, letting a first size be the maximum size of a data frame transmittable in the network, for transferring at least the stream data to the network processing section through the bus by block data of a second size greater than the first size as a unit; and
wherein the network processing section comprises:
a receiving section for receiving the block data transmitted from the bus transfer section;
a buffer memory for temporarily storing the block data received in the receiving section; and
a transmitting section for reading data to be included in a data frame to be transmitted from the buffer memory, generating a data frame of the first size or smaller, and transmitting the data frame to the network connected to the network connector.
